**Europäisches Patentamt**

**European Patent Office**

**Office européen des brevets**

(19)

(11) Veröffentlichungsnummer : **0 199 106 B1**

(12) # EUROPÄISCHE PATENTSCHRIFT

(45) Veröffentlichungstag der Patentschrift :
17.08.88

(21) Anmeldenummer : 86103875.0

(22) Anmeldetag : 21.03.86

(51) Int. Cl.⁴ : **B 62 D 1/18**

(54) Einrichtung zur vertikalen und axialen Einstellung der Lage eines Lenkrades.

(30) Priorität : 22.03.85 DE 3510311

(43) Veröffentlichungstag der Anmeldung :
29.10.86 Patentblatt 86/44

(45) Bekanntmachung des Hinweises auf die Patenterteilung : 17.08.88 Patentblatt 88/33

(84) Benannte Vertragsstaaten :
DE FR GB IT

(56) Entgegenhaltungen :
EP-A- 0 045 230
EP-A- 0 058 495
DE-A- 3 107 459
DE-B- 2 430 604
GB-A- 2 113 629

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Schmitz, Axel, Dipl.-Ing.
Uedesheimer Strasse 28
D-4000 Düsseldorf 1 (DE)

## Beschreibung

Die Erfindung bezieht sich auf eine Einrichtung zur vertikalen und axialen Einstellung der Lage des Lenkrades an einem insbesondere land- und-/oder bauwirtschaftlich nutzbaren Kraftfahrzeug, mit einer in einem hydraulischen Lenkgeber mündenden Lenkwelle, die an einem fahrzeugfesten Teil axial verschiebbar und um eine horizontale Achse schwenkbar gelagert ist, sowie über eine mit einem Handhebel betätigbare Spannschraube in der gewünschten Position festlegbar ist.

Es ist aus der DE-AS 24 30 604 eine Einrichtung zur vertikalen und axialen Einstellung eines Lenkrades bekanntgeworden, die durch einen einzigen Handhebel betätigbar ist. Diese Einrichtung hat eine die Lenksäule eng umfassende Schelle, die durch eine mit dem Handhebel betätigbare Vorrichtung verspannbar ist. Als Verdrehsicherung der Lenksäule dient ein auf dieser angeordneter Längskeil, der in eine Nut der Schelle eingreift. Die Schelle hat eine gelenkige Verbindung mit einer fahrzeugfesten Konsole, wobei in diese Verbindung zur Verbesserung der Feststellbarkeit Klemm- und Reibringe eingeschaltet sind. Bei dieser bekannten Einrichtung ist jedoch durch die verhältnismäßig hoch im Bereich der Lenksäule liegende Schwenkwelle viel Raum zum Ausschwenken des am unteren Ende der Lenksäule anschließenden hydraulischen Lenkgebers erforderlich.

Außerdem müssen alle Teile dieser Einrichtung eine sehr genaue Passung haben, um für alle zum Verspannen dienenden Teile mit dem einen Handhebel stets gleich gute Klemmwirkung zu erzielen. Eine Solche Einrichtung ist recht aufwendig und kostspielig, zumal auch die erforderliche Lenksäule von der handelsüblichen Form abweicht.

Der Erfindung liegt daher die Aufgabe zugrunde, eine Lenkeinrichtung der eingangs umrissenen Art zu schaffen, die unter Verwendung möglichst einfach herzustellender Bauteile eine sehr kompakte Bauweise hat.

Die Aufgabe wird erfindungsgemäß dadurch gelöst, daß der hydraulische Lenkgeber beiderseits mittels Zapfen oder dergl. in Langlöcher eines fahrzeugfesten Teils geführt ist, die etwa in Längsrichtung der Lenkwelle verlaufen, daß beiderseits am Lenkgeber mit Abstand oberhalb der Zapfen achsparallel zu diesen Lenker drehbar angreifen, die mittels Langlöchern auf einer im fahrzeugfesten Teil angeordneten Spannschraube oder dergl. sitzen und durch diese sowohl im Dreh- als auch im Schiebesinn festsetzbar sind.

Durch diese Anordnung liegen alle Bauteile der Einrichtung dicht beieinander und zwar im Bereich des hydraulischen Lenkgebers, so daß sich hierbei eine äußerst gedrungene Bauweise ergibt. Außerdem sind die meisten Teile dieser Einrichtung als einfache Preß- bzw. Stanzteile leicht und kostengünstig herstellbar.

In Weiterbildung der Erfindung ist am Lenkgeber ein diesen umgreifender U-förmiger Bügel befestigt, der in seinem unteren Bereich die in den Langlöchern des fahrzeugfesten Teils geführten Zapfen sowie im oberen Bereich die Drehlager der beiderseits des Lenkgebers angeordneten Lenker trägt.

Nach einem weiteren Gedanken der Erfindung ist vorgesehen, daß der fahrzeugfeste Teil eine nach oben offene U-Form aufweist, bei der in den beiden Schenkeln je eines der Langlöcher zur Aufnahme der beiden Zapfen und mit Abstand darüber die beide Schenkel durchsetzende und an einer Seite mit einem Handhebel versehene Spannschraube angeordnet ist. Dabei ist es aus Gründen der Stabilität zweckdienlich, wenn am U-förmigen Bügel des Lenkgebers beiderseits mehrere parallelgeschaltete Lenker angreifen.

Um eine gute Klemmwirkung zu erreichen, ist es vorteilhaft, wenn die mit ihren Langlöchern auf der Spannschraube sitzenden Lenker gegeneinander bzw. gegenüber dem fahrzeugfesten Teil über zwischengeschaltete Reibringe verspannbar sind.

Schließlich ist es auch vorteilhaft, wenn am verstellbaren Teil der Lenkeinrichtung zur Unterstützung von deren Bewegung nach oben beiderseits vorgespannte Federn angreifen, die andernends am fahrzeugfesten Teil verankert sind.

Ein Ausführungsbeispiel der Erfindung wird im folgenden anhand der Zeichnung näher beschrieben. Es zeigt:

Fig. 1 eine Vorderansicht einer einstellbaren Einrichtung gemäß der Erfindung,

Fig. 2 die Einrichtung gemäß Fig. 1 in Seitenansicht.

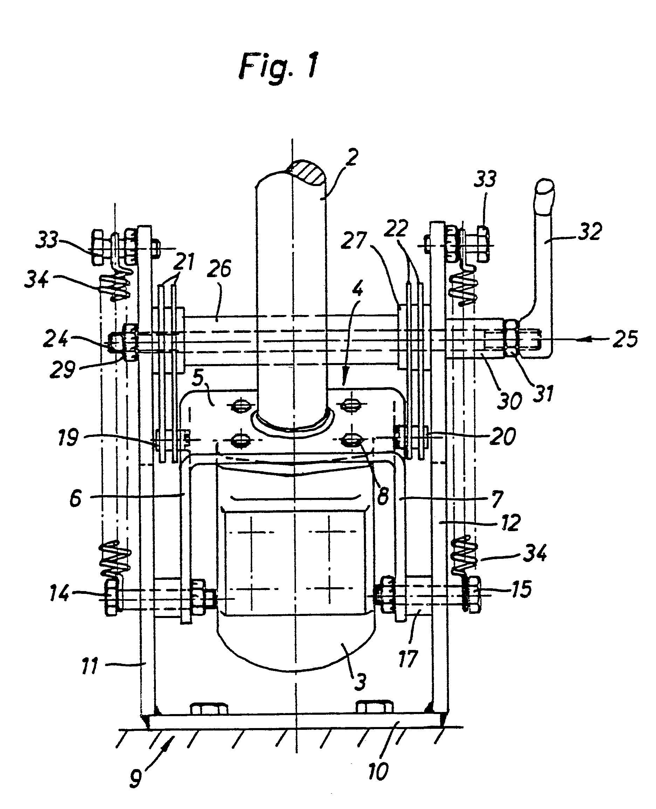

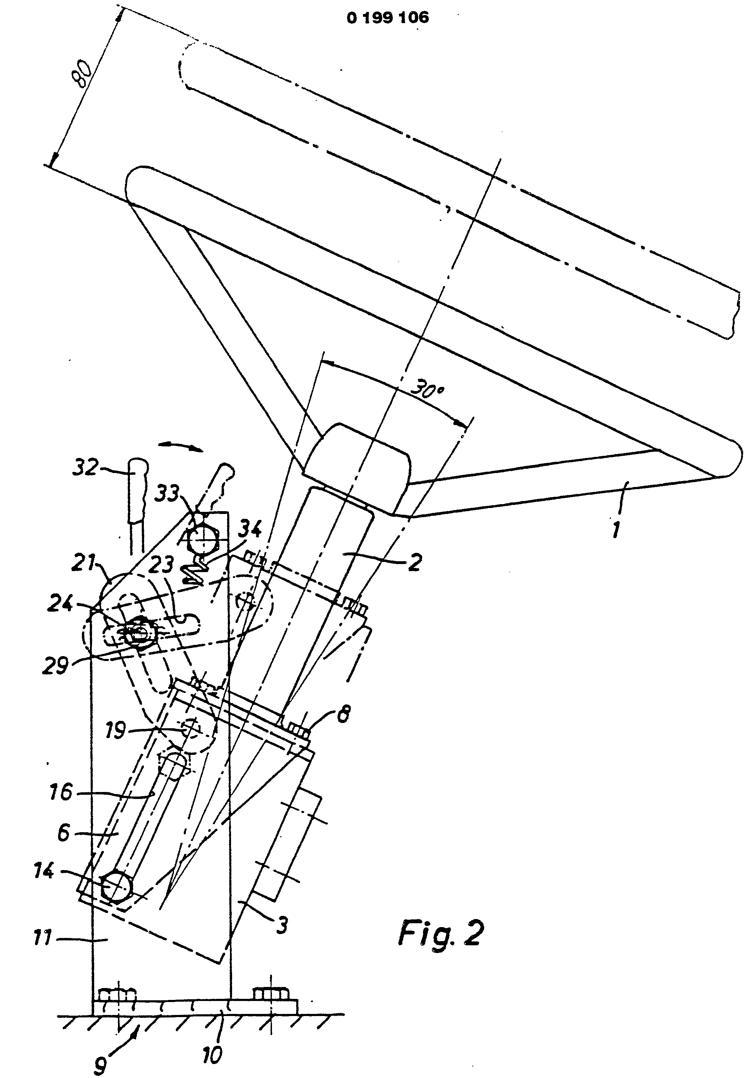

Bei der Lenkeinrichtung gemäß der Fig. 1 und 2 ist eine ein Lenkrad 1 tragende Lenkwelle 2 an ihrem unteren Ende mit einem hydraulischen Lenkgeber verbunden, der über nicht gezeigte Druckschläuche mit der Lenkhydraulik in Verbindung steht. Ein U-förmiger Bügel 4, der aus einem von der Lenkwelle 2 durchsetzten Steg 5 und zwei rechtwinklig dazu verlaufenden Schenkeln 6 und 7 besteht, umgreift den hydraulischen Lenkgeber 3 und ist an diesem mittels Schrauben 8 befestigt. Der hydraulische Lenkgeber 3 sitzt an dem nach unten offenen Bügel 4 in einem oben offenen U-förmigen fahrzeugfesten Teil 9, das von einer Grundplatte 10 nach oben ragende flache Bleche 11, 12 als Schenkel aufweist. Bei dieser Anordnung verlaufen die Schenkel 6, 7 des Bügels 4 parallel zu den Blechen 11, 12 des fahrzeugfesten Teils 9. Die beiden Schenkel 6, 7 des Bügels 4 tragen in ihrem unteren Bereich in Bodennähe des Lenkgebers 3 je einen als Schraube ausgebildeten Zapfen 14 bzw. 15, welche in Langlöcher 16 der Bleche 11 bzw. 12 verschiebbar eingreifen. Auf den Zapfen 14 und 15 sind zwischen den Schenkeln 6, 7 des Bügels 4 und den entsprechenden Blechen 11 bzw. 12 Abstandshülsen 17 angeordnet. Mit Abstand oberhalb der Zapfen 14 und 15 sind an den Schenkeln 6, 7 des Bügels 4 nahe dem Steg 5 Schrauben 19, 20 verankert, die als Lager für je zwei parallel mit Abstand nebeneinander verlaufende Lenker 21 bzw. 22 dienen. Die Lenker 21, 22 sitzen anderenends mittels Langlöchern 23 drehbar und in Längsrichtung verschiebbar auf einer Gewindestange 24, welche Teil einer im oberen Bereich des fahrzeugfesten Teils 9 die Bleche 11, 12 durchsetzenden Spannschraube 25 ist. Auf der Gewindestange 24 sind zwischen den einzelnen Lenkern 21, 22 sowie zwischen diesen und den seitlichen Blechen 11, 12 und einer auf der Gewindestange 24 mittig angeordneten Distanzhülse 26 mehrere Reibringe 27 angeordnet. Das durch das Blech 11 des fahrzeugfesten Teils 9 hindurchragende Ende der Gewindestange 24 greift in eine mit dem Blech 11 verschweißte Mutter 29 ein, während auf dem durch das andere Blech 12 hindurchragenden Ende der Gewindestange 24 im Anschluß an eine Distanzhülse 30 ein mit einer Kontermutter 31 befestigter Handhebel 32 angeordnet ist.

Am oberen Ende der beiden Bleche 11, 12 des fahrzeugfesten Teils 9 sind außen Schrauben 33 als Halter für Schraubenfedern 34 verankert, die anderenends unter Vorspannung an den Zapfen 14 bzw. 15 angreifen.

Durch Betätigung des Handhebels 32 im bzw. entgegen dem Uhrzeigersinn wird die Spannschraube 25 festgezogen bzw. gelöst, wobei die auf dieser sitzenden Lenker 21, 22 entweder dreh- und verschiebbar oder fest verspannt sind. Im gelösten Zustand der Spannschraube 25 kann die Lenkeinheit somit durch Schwenken und/oder Verschieben in Längsrichtung in die in Fig. 2 angedeuteten verschiedenen Positionen gebracht und festgelegt werden. Bei gelöster Spannschraube übernehmen die beiden Federn 34 einen Teil des Gewichts der Lenkeinheit und erleichtern damit das Einstellen derselben in die gewünschte Position. Beim Festziehen der Spannschraube 25 werden die Bleche 11, 12 des fahrzeugfesten Teils 9 auch über die Abstandshülsen 17 gegen den Bügel 7 gezogen, so daß hier evtl. vorhandenes Spiel behoben und daraus mögliche lästige Geräusche vermieden werden.

**Patentansprüche**

1. Einrichtung zur vertikalen und axialen Einstellung der Lage des Lenkrades an einem insbesondere land- und/oder bauwirtschaftlich nutzbaren Kraftfahrzeug, mit einer in einem hydraulischen Lenkgeber (3) mündenden Lenkwelle (2), die an einem fahrzeugfesten Teil axial verschiebbar und um eine horizontale Achse schwenkbar gelagert sowie über eine mit einem Handhebel (32) betätigbare Spannschraube (25) in der gewünschten Position festlegbar ist, dadurch gekennzeichnet, daß der hydraulische Lenkgeber (3) beiderseits mittels Zapfen (14, 15) oder dergl. in Langlöchern (16) eines fahrzeugfesten Teils (9) geführt ist, die etwa in Längsrichtung der Lenkwelle (2) verlaufen, daß beiderseits am Lenkgeber (3) mit Abstand oberhalb der Zapfen (14, 15) achsparallel zu diesen Lenker (21, 22) drehbar angreifen, die mittels Langlöchern (23) auf einer im fahrzeugfesten Teil (9) angeordneten Spannschraube (25) oder dergl. sitzen und durch diese sowohl im Dreh- als auch im Schiebesinn festsetzbar sind.

2. Einrichtung nach Anspruch 1, dadurch gekennzeichnet, daß am Lenkgeber (3) ein diesen umgreifender U-förmiger Bügel (4) befestigt ist, dessen Schenkel (6, 7) in ihrem unteren Bereich die in den Langlöchern (16) des fahrzeugfesten Teils (9) geführten Zapfen (14, 15) sowie im oberen Bereich die Drehlager (19, 20) der beiderseits des Lenkgebers (3) angeordneten Lenker (21, 22) trägt.

3. Einrichtung nach den Ansprüchen 1 und 2, dadurch gekennzeichnet, daß der fahrzeugfeste Teil (9) eine nach oben offene U-Form aufweist, bei der in den beiden Schenkeln (11, 12) je eines der Langlöcher (16) zur Aufnahme der beiden Zapfen (14, 15) und mit Abstand darüber die beide Schenkel (11, 12) durchsetzende und an einer Seite mit einem Handhebel (32) versehene Spannschraube (25) angeordnet ist.

4. Einrichtung nach einem der vorhergehenden Ansprüche, dadurch gekennzeichnet, daß am U-förmigen Bügel (4) des Lenkgebers (3) beiderseits mehrere parallelgeschaltete Lenker (21, 22) angreifen.

5. Einrichtung nach einem der vorhergehenden Ansprüche, dadurch gekennzeichnet, daß die mit ihren Langlöchern (23) auf der Spannschraube (25) sitzenden Lenker (21, 22) gegeneinander bzw. gegenüber dem fahrzeugfesten Teil (9) über zwischengeschaltete Reibringe (27) verspannbar sind.

6. Einrichtung nach einem der vorhergehenden Ansprüche, dadurch gekennzeichnet, daß am verstellbaren Teil der Lenkeinrichtung zur Unterstützung von deren Bewegung nach oben beiderseits vorgespannte Federn (34) angreifen, die anderenends am fahrzeugfesten Teil (9) verankert sind.

**Claims**

1. A device for the vertical and axial adjustment of the position of the steering wheel in a motor vehicle, especially one for use in agriculture and/or in construction work, comprising a steering shaft (2) which opens out into an hydraulic steering transmission (3), which is mounted so as to be axially displaceable on a part fixed to the vehicle and to be orientable about a horizontal axis, and which is also able to be secured in the desired position by means of a tightening screw (25) which is actuatable by a hand lever (32), characterised in that the hydraulic steering transmission (3) is guided on both sides by means of pins (14, 15) or the like in elongated holes (16) of a part (9) fixed to the vehicle with the holes running approximately in the longitudinal direction of the steering shaft (2), and that, on both sides on the steering transmission (3) at a distance above the pins (14, 15) on an axis position parallel to these, guides (21, 22) rotatably engage, which guides, by means of elongated holes (23), sit on a tightening screw (25) or the like which is arranged on the part (9) fixed to the vehicle and are able to be fixed through this screw both in a rotational and also a sliding direction.

2. A device according to Claim 1, characterised in that, on the steering transmission (3), a U-shaped bracket (4) is attached so as to embrace the latter, the shanks (6, 7) of which bracket carry, in their lower region, the pins (14, 15) guided in the elongated holes (16) of the part (9) which is fixed to the vehicle and, in their upper region, carry the pivot bearings (19, 20) of the guides (21, 22) which are arranged on both sides of the steering transmission (3).

3. A device according to Claim 1 or 2, characterised in that the part (9) which is fixed to the vehicle has a U-shape which is open towards the top, wherein the two shanks (11, 12) thereof have, in each case, one of the elongated holes (16) arranged in it to receive the two pins (14, 15) and, at a distance above that, the tightening screw (25) is arranged, which screw penetrates the two shanks (11, 12) and is provided on one side with a hand lever (32).

4. A device according to any one of the preceding Claims, characterised in that a plurality of guides (21, 22), connected in parallel, engage on both sides on the U-shaped bracket (4) of the steering transmission (3).

5. A device according to any one of the preceding Claims, characterised in that the guides (21, 22), with their elongated holes (23) seated on the tightening screw (25), are able to be braced with respect to each other or, respectively, with respect to the part (9) which is fixed to the vehicle via interposed friction rings (27).

6. A device according to any one of the preceding Claims, characterised in that pre-stressed springs (34) engage on both sides of the adjustable part of the steering device to support its upward movement, which springs are anchored at the other end to the part (9) which is fixed to the vehicle.

**Revendications**

1. Dispositif pour le réglage vertical et axial de la position du volant en particulier sur un véhicule utilisable en particulier dans l'agriculture et/ou dans la construction, avec un arbre de direction (2) débouchant dans un transmetteur de direction hydraulique (3), et qui est positionné sur une partie liée rigidement au véhicule, de manière mobile axialement et oscillant autour d'un axe horizontal, ainsi que réglable dans la position souhaitée, au moyen d'une vis de serrage (25) actionnable par un levier à main (32), caractérisé en ce que le transmetteur de direction hydraulique (3) est guidé des deux côtés au moyen de tourillons (14, 15) ou similaire, dans des trous oblongs (16) d'une partie (9), liée rigidement au véhicule, qui se déplacent approximativement dans la direction longitudinale de l'arbre de direction (2), en ce que des bras oscillants engrènent des deux côtés du transmetteur de direction (3), à distance au-dessus des tourillons (14, 15) et parallèlement à l'axe de ceux-ci et qui reposent au moyen de trous oblongs (23) sur une vis de serrage (25), ou similaire, disposée dans la partie (9), liée rigidement au véhicule et sont blocables au moyen de celle-ci, aussi bien dans le sens de la rotation que dans celui du déplacement.

2. Dispositif selon la revendication 1, caractérisé en ce qu'un étrier (4) en forme de U et entourant le transmetteur de direction (3) est fixé sur celui-ci et que ses bras (6, 7) portent dans leur zone inférieure les tourillons (14, 15) guidés dans les trous oblongs (16) de la partie (9) liée rigidement au véhicule, ainsi que dans leur zone supérieure, les paliers tournants (19, 20) des bras oscillants (21, 22), qui sont disposés des deux côtés du transmetteur de direction (3).

3. Dispositif selon les revendications 1 et 2, caractérisé en ce que la partie (9), liée rigidement au véhicule possède une forme en U ouverte vers le haut, dans les deux bras (11, 12) de laquelle un trou oblong (16) est disposé pour chacun, pour recevoir les deux tourillons (14, 15) et, à distance au-dessus, la vis de serrage (25), traversant les deux bras (11, 12) et pourvue à un côté d'un levier à main (32).

4. Dispositif selon l'une des revendications précédentes, caractérisé en ce que plusieurs bras oscillants (21, 22) connectés en parallèle engrènent des deux côtés de l'étrier (4) en forme de U, du transmetteur de direction (3).

5. Dispositif selon l'une des revendications précédentes, caractérisé en ce que les bras oscillants (21, 22) reposant, avec leurs trous oblongs (23), sur le vis de serrage (25), peuvent être serrés entre-eux, respectivement vis-à-vis de la partie (9) liée rigidement au véhicule, au moyen d'anneaux de frottement (27) intercalés.

6. Dispositif selon l'une des revendications précédentes, caractérisé en ce que des ressorts (34) précontraints engrènent sur les deux côtés de la partie mobile du dispositif de direction, pour soutenir son mouvement vers le haut et qui sont ancrés à l'autre extrémité à la partie (9), liée rigidement au véhicule.

# Fig. 1

0 199 106

*Fig. 2*